# EUROPÄISCHE PATENTSCHRIFT

(11) **EP 1 376 805 B1**
(45) Veröffentlichungstag und Bekanntmachung des Hinweises auf die Patenterteilung: **07.10.2009**
(21) Anmeldenummer: 03013707.9
(22) Anmeldetag: 17.06.2003
(51) Int. Cl.: H02G 3/18

(54) **Unterflur-Bodendose**
Under floor distribution box
Boîte de connexion sous-sol

(30) Priorität: 18.06.2002 DE 10227217
(43) Veröffentlichungstag der Anmeldung: 02.01.2004
(73) Patentinhaber: PUK-WERKE AG, Kunststoff-Stahlverarbeitung GmbH & Co., 12057 Berlin (DE); VERGOKAN NV, 9700 Oudenaarde (BE)
(72) Erfinder: Schühle, Ullrich, Dr., 14532 Kleinmachnow (DE); Jeschke, Frank, 12623 Berlin (DE)
(74) Vertreter: Seuss, Thomas

(56) Entgegenhaltungen:
- EP-A- 1 081 821
- JP-A- 2000 308 239
- US-A- 5 705 772

## Beschreibung

Die Erfindung bezieht sich auf eine Unterflur-Bodendose aus einem auf einer Rohdecke vormontierbaren Unterteil und einem diesem zugeordneten, einen Schachtkörper bildenden Oberteil.

Aus der DE 196 39 521 C2 ist eine Unterflur-Bodendose aus Metall bekannt, bei der ein rahmenartiges Oberteil mittels Einstellschrauben auf dem Unterteil befestigt ist, wobei die Oberkante eines oberen Abschlußrahmens auf das Niveau des aufzubringenden Estriches eingestellt werden muß. Zwischen Unterteil und Oberteil ist ein Erhöhungsrahmen einsetzbar, um die Bodendose der Estrichstärke anzupassen. Alternativ ist es auch bekannt, eine umlaufende Schürze aus Drahtgewebe als Erhöhungsrahmen zu verwenden.

Nachteilig bei diesen Unterflur-Bodendosen aus Metall ist der hohe Aufwand für die Ausbildung des einstellbaren oberen Abschlußrahmens. Nachteilig ist ferner, daß eine derartige Unterflur-Bodendose aus Metall keine Trittschalldämmung erbringt. Hierzu darf keine metallisch leitende Verbindung zur Rohdecke bestehen, weder über die Seitenwände des Erhöhungsrahmens, noch über sonstige Abstützungen.

Eine Unterflur-Bodendose der gattungsgemäßen Art ist aus Figur 4 der DE 41 28 116 C1 vorbekannt. Diese besteht aus einem einstückigen Unterteil aus Kunststoff, das einen aufragenden Schachtstutzen bildet, sowie einem auf diesen aufgesetzten kappenförmigen Oberteil aus Kunststoff, an dem sich eine Oberwand befindet. Der Schachtstutzen weist eine eigene geschlossene Oberwand auf, die von dem Oberteil bzw. dessen Oberwand überdeckt wird. Das Oberteil umschließt mit seiner im wesentlichen zylindrischen Seitenwand den Schachtstutzen, auf dem es festgeklemmt ist. Nach Vormontieren des Unterteiles und Aufsetzen des den Schachtkörper bildenden Oberteiles wird der Estrich bis in einen Bereich des Oberteiles aufgetragen, der oberhalb der Oberwand des Unterteiles liegt. Dabei kann der Estrich in dünnflüssiger Form als selbst-nivellierender Fließestrich aufgebracht werden, ohne daß die Gefahr besteht, daß Estrich in die Unterflur-Bodendose eindringt. Nachdem die Oberfläche des Estrichs glatt geworden ist oder geglättet wurde bzw. nach dem Aushärten des Estrichs, steht der obere Bereich des den Schachtkörper bildenden Oberteils über die Estrichschicht hinaus. Dieser obere Bereich aus Kunststoff hat eine so geringe Wandstärke, daß er bündig mit der Estrichoberfläche abgetrennt werden kann. Die Wandstärke ist in diesem Bereich so gering, daß das Abtrennen auch mit einem Handwerkzeug, z.B. einem Messer oder Teppichmesser, erfolgen kann. Auf diese Weise ist eine Anpassung der Schachtlänge an die Estrichhöhe möglich, ohne daß zuvor gemessen werden müßte oder Maßabtrennungen durchzuführen wären. Nach dem Abschneiden ist der Schacht aber noch durch die Oberwand des Unterteiles verschlossen, die erst später für die Kabelmontage aufgeschnitten wird.

Nachteilig hierbei ist, daß sowohl das Unterteil als auch das diesem zugeordnete, den Schachtkörper bildende Oberteil aus Kunststoff bestehen und daß aufwändige Ab- und Aufschneidearbeiten für das Oberteil und die Oberwand des Unterteiles erforderlich sind, bevor weitere Bauelemente, wie insbesondere ein oberer, mit einem Klappdeckel versehener Abschlußrahmen aufgesetzt werden können.

Die Unterflur-Bodendose aus Kunststoff dämpft den Körperschall zwar stärker als eine vergleichbare Unterflur-Bodendose aus Metall. Dennoch ist der Trittschallschutz nicht ausreichend, um den hohen Schallschutzanforderungen zu genügen.

Eine ähnliche Leerdose ist aus der Literaturstelle EP 1 081 821 A1 bekannt.

Der Erfindung liegt somit die Aufgabe zugrunde, die vorbekannten Unterflur-Bodendosen im Hinblick auf die Montage zu vereinfachen und gleichzeitig die Trittschalldämmung erheblich zu verbessern.

Zur Lösung dieser Aufgabe sieht die Erfindung den Gegenstand des Anspruchs 1 vor. Erfindungsgemäß wird nach dem Vormontieren des Unterteiles auf einer Rohdecke der als Schalungskörper ausgebildete Schachtkörper in das Unterteil eingesetzt. Nach dem Aushärten des aufgebrachten Estriches wird der Schalungskörper wieder entfernt, so daß nur das auf der Rohdecke vormontierte Unterteil der Unterflur-Bodendose im Estrich verbleibt, in welchem eine mittels des Schalungskörpers gebildete Bodenöffnung zur Unterflur-Bodendose verbleibt. Die Bodenöffnung wird auf der Oberseite des Estrichs durch eine Einbaueinheit verschlossen.

Die erfindungsgemäße Unterflur-Bodendose ist aufgrund der Ausbildung des Schachtkörpers als Schalungskörper einfach in der Montage. Ferner wird eine äußerst wirksame Trittschalldämmung erreicht, da keine metallisch leitende oder sonstige Schallbrücke zwischen der oberen Einbaueinheit und dem im Estrich eingebundenen Unterteil der Unterflur-Bodendose bzw. der Rohdecke besteht. Die erfindungsgemäße Unterflur-Bodendose mit Schalungskörper bewirkt somit eine vollständige Schallentkoppelung zwischen der Unterflur-Bodendose bzw. den an diese angeschlossenen Bodenkanälen und der oberseitig des Estrichbodens angeordneten Einbaueinheiten, da beide räumlich voneinander getrennt befestigt werden, wobei die Einbaueinheit nur im Estrich befestigt ist und keine körperliche Verbindung mit dem in Estrich eingebundenen Unterteil der Unterflur-Einbaudose besteht. Die Unterflur-Bodendose wird auf dem Rohfußboden verdübelt, und die Einbaueinheit wird über Krallen mit dem Estrich verbunden. Der beschriebene Aufbau und der Einbau der Unterflur-Bodendose verhindern jegliche Rißbildungen im Estrich oder Unebenheiten zwischen Einbaueinheit und Fußbodenbelag beim Absenken oder Heben des Estrichs.

Die erfindungsgemäße Unterflur-Bodendose ermöglicht bei niedrigem Materialeinsatz eine deutlich kostengünstigere Montage von Unterflur-Bodendosen im Vergleich zu vorbekannten Bodendosen. Denn es entfällt jeglicher höhennivellierbare Rahmen, und es ist kein Bauteil ab- bzw. aufzuschneiden. Damit entfällt das zeitaufwändige Nivellieren des Rahmens auf die zu erwartende Estrichhöhe, womit Nivellierfehler ausgeschlossen sind. Es ist kein Abziehen des Estrichs gegen die Oberkante eines metallischen Rahmens, z.B. eines Aluminiumrahmens oder eines Oberteils aus Kunststoff, erforderlich. Die Unterflur-Bodendose und der Schalungskörper sind von der Höhe des Estrichs unabhängig. Außerdem entfallen jegliche Erhöhungsrahmen bei einem erhöhten Fußbodenaufbau.

Weitere vorteilhafte Ausgestaltungen der Erfindung ergeben sich aus den Unteransprüchen. Der erfindungsgemäße Schalungskörper kann als wiederverwendbarer oder als verlorener Schalungskörper ausgebildet sein. Hierbei wird insbesondere auf die äußerst preiswerte Ausbildung des verlorenen Schalungskörpers aus Karton hingewiesen, der auf seiner Außenseite mit einer Kunststoffschicht gegen Aufweichen durch die Feuchtigkeit des Estriches bzw. das in diesem enthaltende Wasser und auf seiner Innenseite mit einer Reißleine versehen sein kann, um den verlorenen Schalungskörper aus dem abgebundenen Estrich leicht zu entfernen.

Die Erfindung ist nachfolgend anhand von mehreren in den Zeichnungen näher dargestellten Ausführungsbeispielen einer Unterflur-Bodendose näher erläutert. Es zeigt:
- Abb. 1: eine Explosionsdarstellung der Unterflur-Bodendose mit im Querschnitt kreisrundem verlorenen Schalungskörper,
- Abb. 2: eine Explosionsdarstellung der Unterflur-Bodendose mit im Querschnitt rechteckigem verlorenen Schalungskörper und
- Abb. 3: einen Schnitt durch die Unterflur-Bodendose nach Abb. 2 im auf einer Rohdecke vormontierten Zustand nach dem Aufbringen des Estrichs.

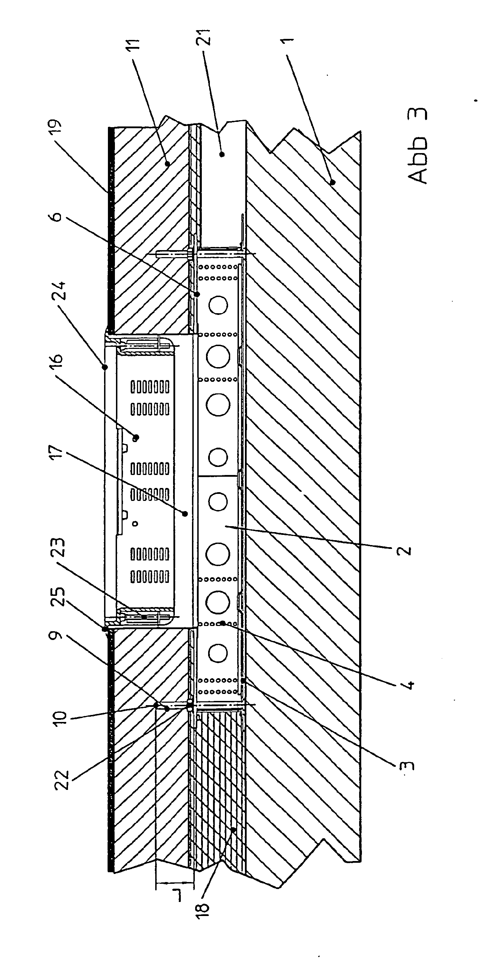

Die Unterflur-Bodendose besteht aus einem auf einer Rohdecke 1 vormontierten Unterteil 2 aus verzinktem Stahlblech. Das Unterteil 2 besteht im Einzelnen aus einem rechteckigen Bodenblech 3, vier mit Perforationslinien 4 perforierten Seitenwänden 5 der Höhe h, einem rechteckigen Deckblech 6 mit einer großen, ausgestanzten, zentralen Öffnung 7, einer diese umgebenden Dichtung 8 aus Gummimaterial und vier Befestigungs- und Abstands-Schrauben 9, die in den Ecken des Bodenbleches 3 und des Deckbleches 6 angeordnet sind und die beim Verschrauben mittels Gewindemuttern 22 die Seitenwände 5 mit den senkrecht zum Bodenblech 3 verlaufenden Perforationslinien 4 zwischen Bodenund Deckblech 3 bzw. 6 einspannen. Die freien, auf der Oberseite des Deckbleches 6 angeordneten Schraubenenden 10 überragen das Deckblech 6 mit der Länge L um die Mindestdicke des aufzubringenden Estrichs 11. Die Höhe h der Seitenwände 5 ist je nach Höhe eines anzuschließenden Bodenkanals 21 (Abb.3) unterschiedlich und an die Höhe des Bodenkanals 21 angepaßt.

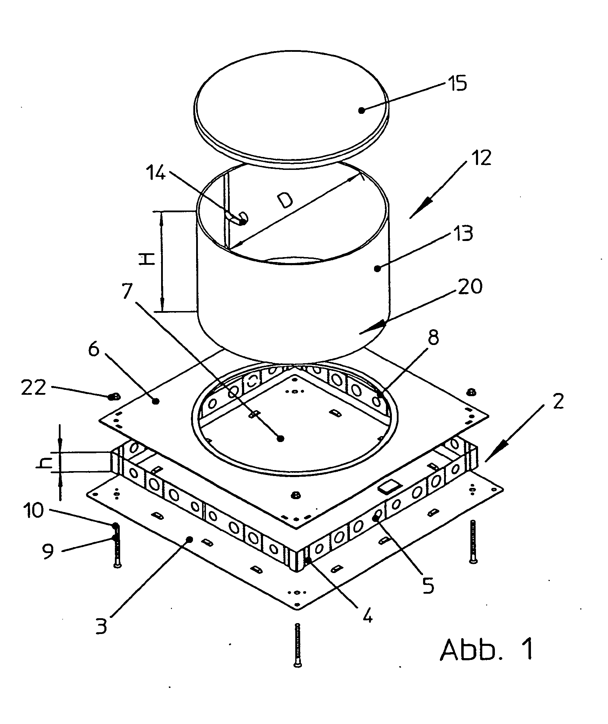

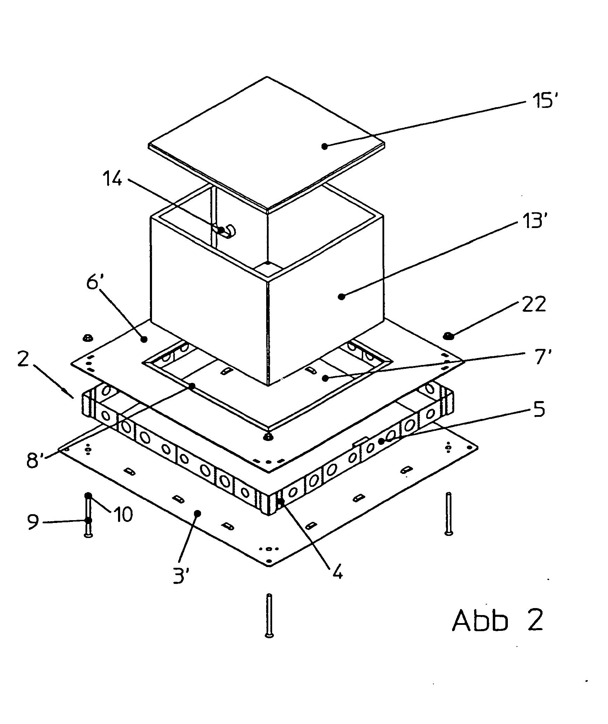

Das dem Unterteil 2 zugeordnete, einen Schachtkörper 20 bildende Oberteil 12 ist als verlorener Schalungskörper 13 der Höhe H ausgebildet, die für unterschiedliche Höhen des Estriches unterschiedlich hoch sein kann. Der Schalungskörper 13 ist in der Ausführungsform nach Abb. 1 für eine kreisrunde zentrale Öffnung 7 des Deckbleches 6 des Unterteiles 2 im Querschnitt kreisrund ausgebildet und hat den Außendurchmesser D, welcher dem Innendurchmesser D der Einführungs-Öffnung 7 des Deckbleches 6 entspricht. Für eine im Querschnitt rechteckig ausgebildete Öffnung 7' des Deckbleches 6 des Unterteiles 2 nach Abb. 2 ist die Öffnung 7' des Dechbleches 6' im Querschnitt rechteckig ausgebildet, wobei der Querschnitt der Öffnung 7' und der Querschnitt des verlorenen Schalungskörpers 13' aneinander angepaßt sind, so daß dieser bündig in die mit der Dichtung 8'versehene Öffnung 7' hineinpaßt.

Der verlorene Schalungskörper 13, 13' ist aus dünnwandigem, kunststoffbeschichteten Karton, Styropor oder anderen Stoffen gebildet und auf seiner Außenseite mit einer nicht dargestellten Kunststoffschicht versehen, die das Aufweichen insbesondere des Kartons durch die Feuchtigkeit des Estriches verhindert. Ferner ist der verlorene Schalungskörper 13, 13' auf seiner Innenseite mit einer in den Karton, in das Styropor oder in andere Stoffe eingebrachten Reißleine 14 versehen, die ein Aufreißen des Schalungskörpers 13, 13' nach Art eines Reißverschlusses nach dem Aushärten des Estrichs 11 ermöglicht, um den verlorenene Schalungskörper 13, 13' aus der im Estrich 11 gebildeten Bodenöffnung 17, 17' leicht entfernen zu können. Der verlorene Schalungskörper 13, 13' kann in beiden Ausführungsformen auf seiner Oberseite mit einem Schutzdeckel 15, 15' versehen sein, um das Eindringen von Estrich 11 beim Aufbringen des Estrichs 11 auf die Rohdecke 1 zu verhindern.

Zur leichten Kontrolle der Mindestdicke des auf die Rohdecke 1 aufgebrachten Estrichs 11 überragen die freien, auf der Seite des Deckbleches 6, 6' angeordneten Schraubenenden 10 der das Boden- und Deckblech 3 bzw. 6, 6' unter Einspannung der Seitenwände 5 verbindenden Befestigungsund Abstands-Schrauben 9 das obere Deckblech 6, 6' des Unterteils 2 um die Länge L, so daß der Estrich 11 mindestens in der Dicke der freien Länge L (Abb.3) der Schrauben 9 aufgebracht werden muß. Die Unterflur-Bodendose gewährleistet somit die nach DIN 18 560 geforderte Estrichüberdeckung durch die Gestaltung der Schraubenenden 10 der Gewindeschrauben 9 derart, daß die geforderte Estrich-Überdeckung dann erreicht ist, wenn die Schraubenenden 10 der Schrauben 9 mindestens bündig mit dem Estrich 11 abschließen. Die Dicke des Estriches 11 über der Rohdecke 1 kann aber auch größer sein, als das durch die freien Enden 10 der mit Gewinde versehenen Schrauben 9 vorgegebene Sollmaß (Länge L).

Die Unterflur-Bodendose wird auf der Rohdecke 1 befestigt, auf der Bodenkanäle 21 in herkömmlicher Weise verlegt werden. Der verlorene Schalungskörper 13, 13' wird in die seiner Einführung dienende Öffnung 7, 7' im Deckblech 6,6' der Unterflur-Bodendose 2 von oben eingesetzt und mit einem Schutzdeckel 15, 15'verschlossen. Zur Verbindung der Bodenkanäle 21 mit der Unterflur-Bodendose sind die Perforationslinien 4 in den Seitenwänden 5 des Unterteiles 2 vorgesehen, wobei die Seitenwände 5 an den Perforationslinien 4 leicht aufgebogen werden können, um eine Verbindung zu den Bodenkanälen 21 herzustellen. Der verlorene Schalungskörper 13, 13' wird anschließend in die Öffnung 7, 7' im Deckblech 6, 6' des Unterteiles 3 von oben eingesetzt und gegebenenfalls mit einem Schutzdeckel 15, 15' verschlossen. Nach dem Verlegen der Dämmung 18 auf der Rohdecke 1 und dem Einbringen und Aushärten des Estriches 11 wird der verlorene Schalungskörper 13, 13' mit der Reißleine 14 geöffnet und wie eine verlorene Schalung entfernt. In die entstandene Bodenöffnung 17, 17' werden nach dem Verlegen eines Fußbodenbelages 19 Einbaueinheiten 16 als Blind- oder Klappdeckel 24 mit Teppichschutzrahmen 25 mittels seitlicher Krallen 23 montiert. Hierbei wird eine vollständige Trittschalldämmung erreicht, da keine metallisch leitende Schallbrücke weder über die Wände der Bodenkanäle 21 noch über nicht vorhandene Nivellierschrauben oder sonstige nicht vorhandene Abstützungen zur Rohdecke 1 bestehen.

In einer nicht d argestellten Ausführungsform kann d er Schalungskörper auch als wied erverwend barer Schalungskör per ausgebildet sein, der nach dem Aushärten des Estriches aus der Einführungsöffnung nach oben herausgezogen wird.

Dazu besitzt d er wied erverwend bare Schalungskörper nach innen bewegbare bzw. klappbare Wand elemente, d ie d en Querschnitt bzw. den Durchmesser des Schalungskörpers vermindern, um diesen aus der Einführugsöffnung wieder entfernen zu können.

## Patentansprüche

1. Unterflur-Bodendose aus einem auf einer Rohdecke (1) vormontierten Unterteil (2) und einem diesem zugeordneten, einen Schachtkörper (20) bildenden Oberteil (12),
**dadurch gekennzeichnet,**
**daß** der Schachtkörper (20) als verlorener Schalungskörper (13, 13')ausgebildet ist, und
**daß** das Unterteil (2) mit einer zentralen Öffnung (7,7')zum Einsetzen des Schalungskörpers (20, 20') versehen ist.

2. Unterflur-Bodendose nach Anspruch 1, **dadurch gekennzeichnet, daß** die zentrale Öffnung (7)des Unterteiles (2) und der in diese einsetzbare Schalungskörper (13) im Querschnitt kreisrund ausgebildet sind.

3. Unterflur-Bodendose nach Anspruch 1, **dadurch gekennzeichnet, daß** die zentrale Öffnung (7') des Unterteiles (2) und der in diese einsetzbare Schalungskörper (13') im Querschnitt rechteckig ausgebildet sind.

4. Unterflur-Bodendose nach einem der Ansprüche 1-3, **dadurch gekennzeichnet, daß** der Schalungskörper (13, 13') aus Karton gebildet ist.

5. Unterflur-Bodendose nach einem der Ansprüche 1-3, **dadurch gekennzeichnet, daß** der Schalungskörper (13, 13')aus Styropor gebildet ist.

6. Unterflur-Bodendose nach einem der Ansprüche 3-5, **dadurch gekennzeichnet, daß** der Schalungskörper (13, 13') auf seiner Außenseite mit einer Kunststoffschicht versehen ist.

7. Unterflur-Bodendose nach einem der Ansprüche 3-6, **dadurch gekennzeichnet, daß** der Schalungskörper (13, 13')auf seiner Innenseite mit einer Reißleine (14) versehen ist.

8. Unterflur-Bodendose nach einem der Ansprüche 1-7, **dadurch gekennzeichnet, daß** der Schalungskörper (13, 13')auf seiner Oberseite mit einem Schutzdeckel (15, 15') versehen ist.

9. Unterflur-Bodendose nach einem der Ansprüche 1-8, **dadurch gekennzeichnet, daß** die zentrale Öffnung (7, 7') des Unterteiles (2) mit einer Dichtung (8, 8') zum Abdichten des einsetzbaren Schalungskörpers (13, 13') versehen ist.

10. Unterflur-Bodendose nach einem der Ansprüche 1-9, **dadurch gekennzeichnet, daß** das Unterteil (2) aus einem flachen Bodenblech (3), einem Deckblech (6, 6') und seitliche Anschlußöffnungen für Bodenkanäle (21) bildenden Seitenwänden (5) ausgebildet ist, wobei Boden- und Deckblech (3 bzw. 6, 6') unter Einspannung der Seitenwände (5) mittels Gewindeschrauben (9) miteinander verbunden sind, deren freie, auf der Seite des Deckbleches (6, 6') angeordnete Schraubenenden (10) das Deckblech (6) mit der Länge (L) um die Mindestdicke des Estriches (11) überragen.

11. Unterflur-Bodendose nach einem der Ansprüche 1-10, **dadurch gekennzeichnet, daß** eine Einbaueinheit (16) nach dem Aufbringen des Estriches (11) in dem Unterteil (2) mittels Krallen (23) in der durch den Schalungskörper (7, 7') gebildeten Bodenöffnung (17, 17') des Estrichs (11) fest verankerbar ist.

## Claims

1. An underfloor junction box comprising a lower part (2) preassembled on a bare floor (1) and an upper part (12) assigned thereto and forming a shaft body (20),
**characterized in**
**that** the shaft body (20) is configured as a lost shell body (13, 13'), and
**that** the lower part (2) is provided with a central opening (7, 7') for inserting the shell body (20, 20').

2. The underfloor junction box according to claim 1, **characterized in that** the central opening (7) of the lower part (2) and the shell body (13) insertable thereinto have a circular cross section.

3. The underfloor junction box according to claim 1, **characterized in that** the central opening (7') of the lower part (2) and the shell body (13') insertable thereinto have a rectangular cross section.

4. The underfloor junction box according to one of claims 1 - 3, **characterized in that** the shell body (13, 13') is formed of cardboard.

5. The underfloor junction box according to one of claims 1 - 3, **characterized in that** the shell body (13, 13') is formed of styrofoam.

6. The underfloor junction box according to one of claims 3 - 5, **characterized in that** the shell body (13, 13') is provided on its outside with a plastic layer.

7. The underfloor junction box according to one of claims 3 - 6, **characterized in that** the shell body (13, 13') is provided on its inside with a pull wire (14).

8. The underfloor junction box according to one of claims 1 - 7, **characterized in that** the shell body (13, 13') is provided on its upper side with a protective cover (15, 15').

9. The underfloor junction box according to one of claims 1 - 8, **characterized in that** the central opening (7, 7') of the lower part (2) is provided with a seal (8, 8') for sealing the insertable shell body (13, 13').

10. The underfloor junction box according to one of claims 1 - 9, **characterized in that** the lower part (2) is formed of a flat bottom plate (3), a cover plate (6, 6') and side walls (5) forming lateral connection openings for floor channels (21), the bottom and cover plates (3 or 6, 6') being connected with each other by clamping the side walls (5) by means of threaded bolts (9), the free bolt ends (10) of which arranged on the side of the cover plate (6, 6') overtopping the cover plate (6) with the length (L) by the minimum thickness of the screed (11).

11. The underfloor junction box according to one of claims 1 - 10, **characterized in that** after laying the screed (11), an assembly unit (16) is firmly securable in the lower part (2) by means of claws (23) in the bottom opening (17, 17') of the screed (11) formed by the shell body (7, 7').

## Revendications

1. Boîte de dérivation en sous-sol comprenant une partie inférieure (2) pré-assemblée sur un plafond brut (1) et une partie supérieure (12) assignée à celle-ci et formant un corps de puits (20),
**caractérisée en ce**
**que** le corps de puits (20) est configuré comme coffrage (13, 13') perdu, et
**que** la partie inférieure (2) est pourvue d'une ouverture central (7, 7') pour l'insertion du coffrage (20, 20').

2. Boîte de dérivation en sous-sol selon la revendication 1, **caractérisée en ce que** l'ouverture centrale (7) de la partie inférieure (2) et le coffrage (13) insérable là-dedans ont une section circulaire.

3. Boîte de dérivation en sous-sol selon la revendication 1, **caractérisée en ce que** l'ouverture centrale (7') de la partie inférieure (2) et le coffrage (13') insérable là-dedans ont une section rectangulaire.

4. Boîte de dérivation en sous-sol selon une des revendications 1 - 3, **caractérisée en ce que** le coffrage (13, 13') est formé en carton.

5. Boîte de dérivation en sous-sol selon une des revendications 1 - 3, **caractérisée en ce que** le coffrage (13, 13') est formé en styrofoam.

6. Boîte de dérivation en sous-sol selon une des revendications 3 - 5, **caractérisée en ce que** le coffrage (13, 13') est pourvu sur son extérieur d'une couche en plastique.

7. Boîte de dérivation en sous-sol selon une des revendications 3 - 6, **caractérisée en ce que** le coffrage (13, 13') est pourvu sur son intérieur d'un câble à tirer (14).

8. Boîte de dérivation en sous-sol selon une des revendications 1 - 7, **caractérisée en ce que** le coffrage (13, 13') est pourvu sur son côté supérieur d'un couvercle protecteur (15, 15').

9. Boîte de dérivation en sous-sol selon une des revendications 1 - 8, **caractérisée en ce que** l'ouverture centrale (7, 7') de la partie inférieure (2) est pourvue d'un joint (8, 8') pour étancher le coffrage insérable (13, 13').

10. Boîte de dérivation en sous-sol selon une des revendications 1 - 9, **caractérisée en ce que** la partie inférieure (2) est formée d'une plaque de fond plate (3), d'une plaque de couverture (6, 6') et de parois latérales (5) formant des ouvertures latérales de connexion pour des canaux de plafond (21), les plaques de fond et de couverture (3 ou 6, 6') étant liées l'une à l'autre par fixation des parois latérales (5) au moyen de vis filetées (9), les extrémités libres (10) desquelles arrangées sur le côté de la plaque de couverture (6, 6') faisant saillie de la plaque de couverture (6) avec une longueur (L) par l'épaisseur minimale de l'aire en ciment (11).

11. Boîte de dérivation en sous-sol selon une des revendications 1 - 10, **caractérisée en ce qu'**après la pose de l'aire en ciment (11), une unité de montage (16) est fortement ancrable dans la partie inférieure (2) au moyen de crampons (23) dans l'ouverture de fond (17, 17') de l'aire en ciment (11) formée par le coffrage (7, 7').
